# EUROPEAN PATENT APPLICATION

(11) **EP 4 663 474 A1**
(43) Date of publication of application: **17.12.2025**
(21) Application number: 24753494.4
(22) Date of filing: 19.01.2024
(51) Int. Cl.: B60N 2/28, A47D 5/00, A47D 15/00

(54) **DIAPER CHANGING TABLE FOR VEHICLE**

(30) Priority: 06.02.2023 KR 20230015712
(71) Applicant: Proprebebe Inc., Gunpo-si, Gyeonggi-do 15843 (KR)
(72) Inventor: HWA, Seong Hye, Gunpo-si, Gyeonggi-do 15843 (KR)
(74) Representative: Valet Patent Services Limited
(86) International application number: PCT/KR2024/000962
(87) International publication number: WO 2024/167162

(57) **Abstract**

The present invention relates to a diaper changing table for a vehicle, the diaper changing table including a main mat supporting the back of an infant and a sub mat that is coupled to an upper side of the main mat and supports the head of the infant.

## Description

### [Technical Field]

The present invention relates to a diaper changing table for a vehicle, and more particularly, to a diaper changing table for a vehicle that enables a diaper of an infant to be conveniently changed by utilizing an internal structure of a vehicle.

### [Background Art]

A diaper changing table is a device in which an infant is placed on a plate and a diaper of the infant is changed. The conventional diaper changing table is manufactured to be foldable or liftable/lowerable to improve portability and efficiently utilize space, but when the diaper changing table is used at a backseat inside a vehicle, there is a problem that it is difficult to safely fix the diaper changing table because space is greatly limited due to a car seat or the like.

In the present invention, a diaper changing table for a vehicle that addresses the above problem and enables a diaper of an infant to be conveniently changed by efficiently utilizing an internal structure of a vehicle even inside the vehicle is described.

### [Disclosure]

### [Technical Problem]

The present invention relates to a diaper changing table for a vehicle, and more particularly, to a diaper changing table for a vehicle that enables a diaper of an infant to be conveniently changed by utilizing an internal structure of a vehicle.

### [Technical Solution]

One embodiment of the present invention provides a diaper changing table for a vehicle that is fixed to a backseat inside a vehicle and used in a first mode or a second mode, the diaper changing table including a main mat supporting the back of an infant and a sub mat that is coupled to an upper side of the main mat and supports the head of the infant, wherein a first coupling member coupled to a head portion of a passenger seat of the vehicle is provided on a side of the main mat, and in the first mode of the diaper changing table, in a state in which the first coupling member is coupled to the head portion of the passenger seat of the vehicle, one side of the sub mat is inserted and fixed between a main body portion of the passenger seat and a wall surface of the vehicle, one side of the main mat is supported by a rear surface of the main body portion of the passenger seat, and the other side of the main mat is supported by the backseat of the vehicle.

A second coupling member coupled to a leg of a user is provided on a lower end of the main mat and in the second mode of the diaper changing table, in a state in which the second coupling member is coupled to the leg of the user sitting on the backseat of the vehicle, the sub mat is inserted and fixed between a driver's seat and the passenger seat of the vehicle, and the main mat is supported by the leg of the user.

A width of the sub mat is larger than a width of the main mat and in the second mode, both side portions of the sub mat are folded and inserted between the driver's seat and the passenger seat of the vehicle, and as the both side portions of the sub mat are folded, rear surfaces of the both side portions come into contact with a side surface of the driver's seat and a side surface of the passenger seat, respectively.

### [Advantageous Effects]

In a first mode of a diaper changing table for a vehicle of the present invention, one side of a sub mat is inserted and fixed between a main body portion of a passenger seat and a wall surface of a vehicle, and one side of a main mat is supported by a rear surface of the main body portion of the passenger seat, and accordingly, a user can place an infant on the diaper changing table for a vehicle and can safely change a diaper of the infant.

In a second mode of the diaper changing table for a vehicle of the present invention, a second coupling member is coupled and fixed to a leg of a user, and a sub mat is folded and firmly fixed between the driver's seat and the passenger seat, and accordingly, a user can place an infant on the diaper changing table for a vehicle and can safely change a diaper of the infant.

### [Description of Drawings]

FIG. 1 is a view showing a diaper changing table for a vehicle according to one embodiment of the present invention.
FIG. 2 is a view showing the diaper changing table for a vehicle that is installed according to a first mode according to one embodiment of the present invention.
FIGS. 3 and 4 are views showing the diaper changing table for a vehicle that is installed according to a second mode according to one embodiment of the present invention.

### [Best Mode of the Invention]

A pacifier according to one embodiment of the present invention provides a diaper changing table for a vehicle that is fixed to a backseat inside a vehicle and used in a first mode or a second mode, the diaper changing table including a main mat supporting the back of an infant and a sub mat that is coupled to an upper side of the main mat and supports the head of the infant, wherein a first coupling member coupled to a head portion of a passenger seat of the vehicle is provided on a side of the main mat, and in the first mode of the diaper changing table, in a state in which the first coupling member is coupled to the head portion of the passenger seat of the vehicle, one side of the sub mat is inserted and fixed between a main body portion of the passenger seat and a wall surface of the vehicle, one side of the main mat is supported by a rear surface of the main body portion of the passenger seat, and the other side of the main mat is supported by the backseat of the vehicle.

### [Modes of the Invention]

Hereinafter, embodiments of the present invention will be described in detail with reference to the accompanying drawings so that those of ordinary skill in the art to which the present invention pertains can easily carry out the present invention. However, the present invention may be implemented in various different forms and is not limited to the embodiments described herein. Also, in the drawings, in order to clearly describe the present invention, parts irrelevant to the description are omitted, and like parts are denoted by like reference numerals throughout the specification.

Throughout the specification, when a certain part is described as being "connected" to another part, this includes not only a case in which the part is "directly connected" to the other part, but also a case in which the part is "electrically connected" to the other part with another element disposed therebetween. Also, when a certain part is described as "including" a certain component, unless particularly described otherwise, this means that the part may further include other components instead of excluding other components. Hereinafter, the present invention will be described in detail with reference to the accompanying drawings.

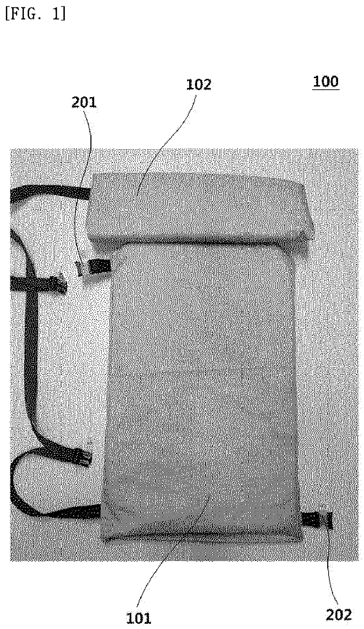

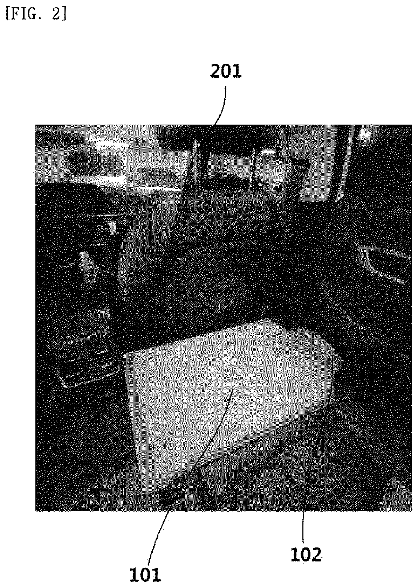

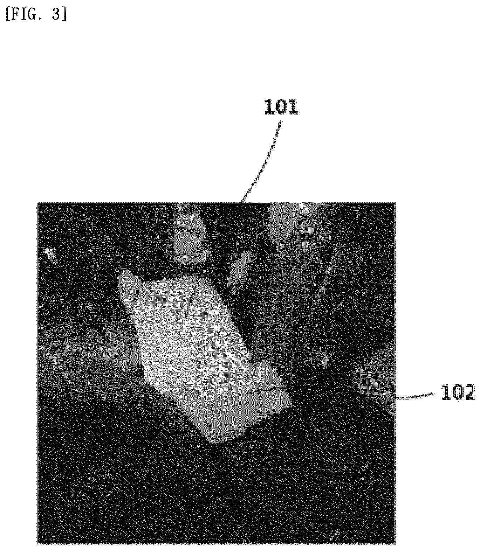

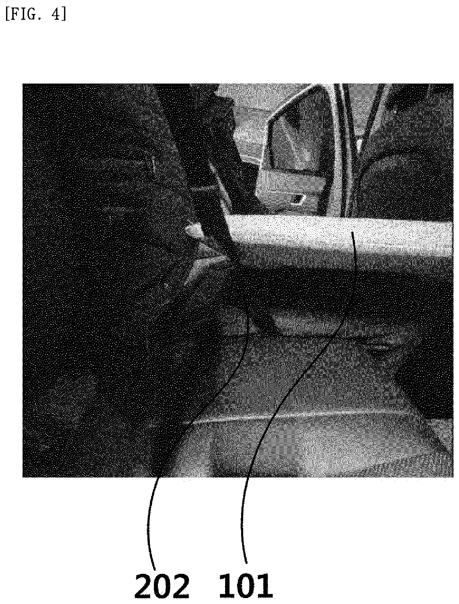

FIG. 1 is a view showing a diaper changing table 100 for a vehicle according to one embodiment of the present invention, FIG. 2 is a view showing the diaper changing table 100 for a vehicle that is installed according to a first mode according to one embodiment of the present invention, and FIGS. 3 and 4 are views showing the diaper changing table 100 for a vehicle that is installed according to a second mode according to one embodiment of the present invention.

Referring to FIG. 1, the diaper changing table 100 for a vehicle according to one embodiment of the present invention may include a main mat 101 and a sub mat 102.

The main mat 101 may have a quadrangular shape in a plan view and may serve to support the back of an infant.

The sub mat 102 may be coupled to an upper side of the main mat 101. For example, a button may be provided on each of a lower portion of the sub mat 102 and an upper portion of the main mat 101, and the sub mat 102 and the main mat 101 may be coupled through the corresponding buttons. The sub mat 102 may serve to support the head of the infant. As illustrated in FIG. 1, in a plan view, a horizontal length of the main mat 101 may be shorter than a horizontal length of the sub mat 102. That is, a width of the sub mat 102 may be larger than a width of the main mat 101. In addition, a vertical length of the main mat 101 may be longer than a vertical length of the sub mat 102.

A first coupling member 201 and a second coupling member 202 may be provided on the main mat 101.

The first coupling member201 may be provided on a side of the main mat 101 and may be a coupling member used in the first mode which will be described below.

The second coupling member 202 may be provided on a lower end of the main mat 101 and may be a coupling member used in the second mode which will be described below.

The first coupling member 201 and the second coupling member 202 may be known coupling members as illustrated in FIG. 1, and the first coupling member 201 and the second coupling member 202 may be connected and integrally formed. However, the present invention is not limited thereto, and the first coupling member 201 and the second coupling member 202 may have various shapes and use various coupling methods.

The diaper changing table 100 for a vehicle that is installed according to the first mode and the second mode will be described below with reference to FIGS. 2 to 4.

In the first mode of the diaper changing table 100 for a vehicle, in a state in which the first coupling member 201 is coupled to a head portion of a passenger seat of the vehicle, one side of the sub mat 102 may be inserted and fixed between a main body portion of the passenger seat and a wall surface of the vehicle, one side of the main mat 101may be supported by a rear surface of the main body portion of the passenger seat, and the other side of the main mat 101 may be supported by the backseat of the vehicle.

In this way, in the first mode of the diaper changing table 100 for a vehicle, since the one side of the sub mat 102 is inserted and fixed between the main body portion of the passenger seat and the wall surface of the vehicle, and the one side of the main mat 101 is supported by the rear surface of the main body portion of the passenger seat,a user can place an infant on the diaper changing table 100for a vehicle and can safely change a diaper of the infant.

In the second mode of the diaper changing table 100for a vehicle, in a state in which the second coupling member 202 is coupled to a leg of a user sitting on a backseat of the vehicle as illustrated in FIG. 4, the sub mat 102 may be inserted and fixed between the driver's seat and the passenger seat of the vehicle, and the main mat 101 may be supported by the leg of the user. However, the present invention is not limited thereto, and even in a state in which the second coupling member 202 is not coupled to the leg of the user, the user may support the main mat 101 with his or her leg and may push his or her stomach toward the main mat 101 to fix and use the diaper changing table 100 for a vehicle.

Both side portions of the sub mat 102 may be formed to be foldable. Therefore, in the second mode, both side portions of the sub mat 102 may be folded and inserted between the driver's seat and the passenger seat of the vehicle as illustrated in FIG. 3, and as the both side portions of the sub mat 102 are folded, rear surfaces of the both side portions may be fixed by coming into contact with a side surface of the driver's seat and a side surface of the passenger seat, respectively. The head of the infant is positioned between the corresponding both side portions, and due to the both side portions of the sub mat 102, the head of the infant can be prevented from colliding with hard portions disposed on the side surface of the driver's seat and the side surface of the passenger seat.

In this way, in the second mode of the diaper changing table 100 for a vehicle, since the second coupling member 202 is coupled and fixed to the leg of the user, and the sub mat 102 is folded and firmly fixed between the driver's seat and the passenger seat, the user can place an infant on the diaper changing table 100for a vehicle and can safely change a diaper of the infant.

## Claims

1. A diaper changing table for a vehicle that is fixed to a backseat inside a vehicle and used in a first mode or a second mode, the diaper changing table comprising:
a main mat supporting the back of an infant; and
a sub mat that is coupled to an upper side of the main mat and supports the head of the infant,
wherein a first coupling member coupled to a head portion of a passenger seat of the vehicle is provided on a side of the main mat, and
in the first mode of the diaper changing table, in a state in which the first coupling member is coupled to the head portion of the passenger seat of the vehicle, one side of the sub mat is inserted and fixed between a main body portion of the passenger seat and a wall surface of the vehicle, one side of the main mat is supported by a rear surface of the main body portion of the passenger seat, and the other side of the main mat is supported by the backseat of the vehicle.

2. The diaper changing table of claim 1, wherein:
a second coupling member coupled to a leg of a user is provided on a lower end of the main mat; and
in the second mode of the diaper changing table, in a state in which the second coupling member is coupled to the leg of the user sitting on the backseat of the vehicle, the sub mat is inserted and fixed between a driver's seat and the passenger seat of the vehicle, and the main mat is supported by the leg of the user.

3. The diaper changing table of claim2, wherein:
a width of the sub mat is larger than a width of the main mat; and
in the second mode, both side portions of the sub mat are folded and inserted between the driver's seat and the passenger seat of the vehicle, and as the both side portions of the sub mat are folded, rear surfaces of the both side portions come into contact with a side surface of the driver's seat and a side surface of the passenger seat, respectively.
